# DEMANDE DE BREVET EUROPEEN

(11) **EP 0 612 135 A1**
(43) Date de publication de la demande: **24.08.1994**
(21) Numéro de dépôt: 94420050.0
(22) Date de dépôt: 14.02.1994
(51) Int. Cl.: H02K 5/128, H02K 5/16, F04D 13/06, F04D 29/04

(54) **Dispositif de pivotement pour rotor noye**

(30) Priorité: 15.02.1993 FR 9301956
(71) Demandeur: Douanne, André, F-69004 Lyon (FR)
(72) Inventeur: Douanne, André, F-69004 Lyon (FR)
(74) Mandataire: Gasquet, Denis

(57) **Abrégé**

Dispositif de pivotement pour rotor (2) de moteur (3), ledit rotor (2) comprenant à ses deux extrémités, une pièce ou bague d'extrémité, respectivement une pièce ou bague d'extrémité avant (36) et une pièce ou bague d'extrémité arrière (37), caractérisé en ce que le rotor est noyé dans un fluide liquide contenu dans une chambre (43) tandis que le diamètre de chacune des bagues est légèrement inférieur au diamètre de ladite chambre dans la zone de ladite bague de façon à ce qu'en position de repos le rotor soit en appui dans la chambre par l'intermédiaire des bagues d'extrémité, tandis qu'en rotation, il se crée un film de fluide entre les surfaces extérieures des bagues et la face interne de la chambre constituant ainsi une portée hydrodynamique.

## Description

La présente invention concerne un dispositif de pivotement pour rotor noyé.

Il existe de nombreuses applications pour lesquelles un moteur est nécessaire, que ce soit dans le domaine des pompes des ventilateurs, des dispositifs de commande de vannes, des agitateurs et autres. Ces moteurs sont destinés à entraîner en rotation une pièce mobile et comprennent un rotor tournant dont le pivotement est entraîné par un champ magnétique tournant qui peut être créé soit par un bobinage électrique alimenté en courant alternatif, soit par le champ d'aimants permanents. Le rotor, quant à lui, peut être constitué d'aimants permanents ou par un empilage de tôles isolées les unes des autres, ledit rotor étant alors dit du type "à cage d'écureuil".

Il existe déjà des constructions dans lesquelles le rotor est noyé, c'est-à-dire qu'il est immergé dans un fluide, le stator étant alors chemisé, de manière à constituer une chambre étanche contenant ledit fluide. Le rotor étant alors enfermé dans une chemise fermée aux deux extrémités par un flasque, afin de le protéger du fluide dans lequel il baigne. Dans ces constructions, le rotor, bien qu'immergé, est traditionnellement, et dans un très grand nombre d'applications, supporté par des paliers hydrodynamiques ou hydrostatiques, disposés hors de la zone du rotor et supportant alors l'axe du rotor par ses extrémités. Dans le cas de paliers hydrodynamiques, ceux-ci utilisent la portance d'un film fluide généré par la rotation de la partie tournante du palier, appelée généralement fusée. Dans le cas de paliers hydrostatiques, on utilise la portance d'un fluide mis sous pression par un dispositif annexe.

Ces deux types de construction présentent un certain nombre d'inconvénients. On peut noter tout d'abord la complexité de la construction. De plus, dans le cas de paliers hydrodynamiques, les matériaux utilisés pour réaliser les pièces en pivotement relatif doivent posséder de très bonnes qualités de frottement et d'accommodement lors des arrêts et démarrages successifs qui provoquent la mise en contact des différentes pièces, alors même que celles-ci sont encore en mouvement. Par ailleurs, ces constructions traditionnelles avec deux paliers d'extrémité nécessitent des concentricités et des alignements rigoureux des différentes pièces. On comprendra donc aisément que les machines actuelles sont complexes, donc peu fiables et coûteuses tant lors de leur fabrication que lors de leur réparation.

La présente invention a pour but de résoudre les inconvénients évoqués précédemment et propose un dispositif de pivotement pour rotor immergé, particulièrement simple, fiable et peut coûteux.

Ainsi selon le dispositif de l'invention, les paliers classiques sont supprimés et ce sont des pièces d'extrémité accolées au rotor, qui, par coopération avec la chemise statorique constituent les paliers hydrodynamiques ou hydrostatiques de pivotement. La chemise statorique constituant la partie fixe du palier, tandis que les pièces d'extrémité en constituent les pièces mobiles, un film fluide étant alors formé entre ces deux éléments. Le film fluide porteur étant soit créé par le simple pivotement du rotor noyé dans ce fluide (portée hydrodynamique), soit par mise en pression localisée du fluide (portée hydrostatique).

Ainsi selon l'invention, le dispositif de pivotement pour rotor noyé de moteur, est caractérisé en ce qu'il est contenu dans un ensemble d'étanchéité comprenant à ses deux extrémités, une pièce ou bague d'extrémité, respectivement une pièce ou bague d'extrémité avant et une pièce ou bague d'extrémité arrière, dont le diamètre est légèrement inférieur au diamètre de ladite chambre dans la zone de ladite bague.

Selon différents modes de réalisation, la largeur de la bague d'extrémité avant est égale ou différente à la largeur de la bague d'extrémité arrière. De même, le diamètre de la bague d'extrémité avant est égal ou différent au diamètre de la bague d'extrémité arrière.

Selon une disposition préférée, l'ensemble d'étanchéité est constitué par une chemise ayant la forme générale d'un tube constitué par une paroi périphérique cylindrique entourant le rotor, fermé à ses deux extrémités, respectivement par un flasque avant et un flasque arrière.

Selon un mode d'exécution donné à titre d'exemple, l'une au moins des bagues d'extrémité est amovible et est fixée de façon démontable sur le flasque correspondant, tandis que pour d'autres variantes, l'une au moins des bagues d'extrémité est partie intégrante du rotor ou de la chemise de rotor ou du flasque correspondant.

Grâce aux deux bagues d'extrémité dont le diamètre est légèrement inférieur au diamètre de la chambre à l'état de repos, la partie rotative porte dans la chambre, non pas par le rotor proprement dit, mais par les bagues d'extrémité dont les surfaces extérieures sont en appui sur la face interne du manchon de ladite chambre. Lors du pivotement, il se crée un film de fluide entre lesdites bagues et la paroi interne de ladite chambre constituant ainsi une portée hydrodynamique.

Dans une variante d'exécution, il est prévu de séparer le rotor proprement dit de bague d'extrémité et de réaliser une série de trous permettant le passage du liquide de la face avant vers la face arrière de chacune desdites bagues. Le système selon cette variante ayant pour avantage d'assurer la lubrification des bagues et d'évacuer les calories de frottement hydraulique, d'évacuer les calories dégagées par effet "JOULE" et courants de " FOUCAULT" dans le stator (4) et son rotor (2), de pressuriser le débit de lubrification et de refroidissement (Pr>Pa) et d'éviter ainsi les risques de cavitation, de supprimer l'effet de piston (alimentation entre les bagues) par rapport à une alimentation de débit extérieure aux bagues.

D'autres caractéristiques et avantages de l'invention se dégageront de la description qui va suivre en regard des dessins annexés qui ne sont donnés qu'à titre d'exemples non limitatifs.

Les figures 1 à 5 illustrent un mode d'exécution d'un dispositif selon l'invention. Ces figures illustrent de plus, une des utilisations possibles du dispositif et ce, dans le contexte d'une pompe.

La figure 1 est une vue en coupe longitudinale de la pompe utilisant le dispositif selon l'invention.

La figure 2 est une vue schématique simplifiée illustrant la pompe de la figure 1.

La figure 3 est une vue partielle en coupe, similaire à la figure 1, montrant des détails de réalisation par les figures respectives 3a et 3b.

Les figures 4 et 5 sont des vues schématiques en bout, montrant le rotor dans sa position de repos (figure 4) et dans sa position active de pivotement (figure 5).

Les figures 6 à 9 illustrent quatre variantes de réalisation du dispositif de pivotement de l'invention.

Les figures 10 à 16 représentent différents modes d'exécution des bagues d'extrémité du dispositif de pivotement de l'invention.

La figure 17 est une vue similaire à la figure 2 illustrant une variante d'exécution.

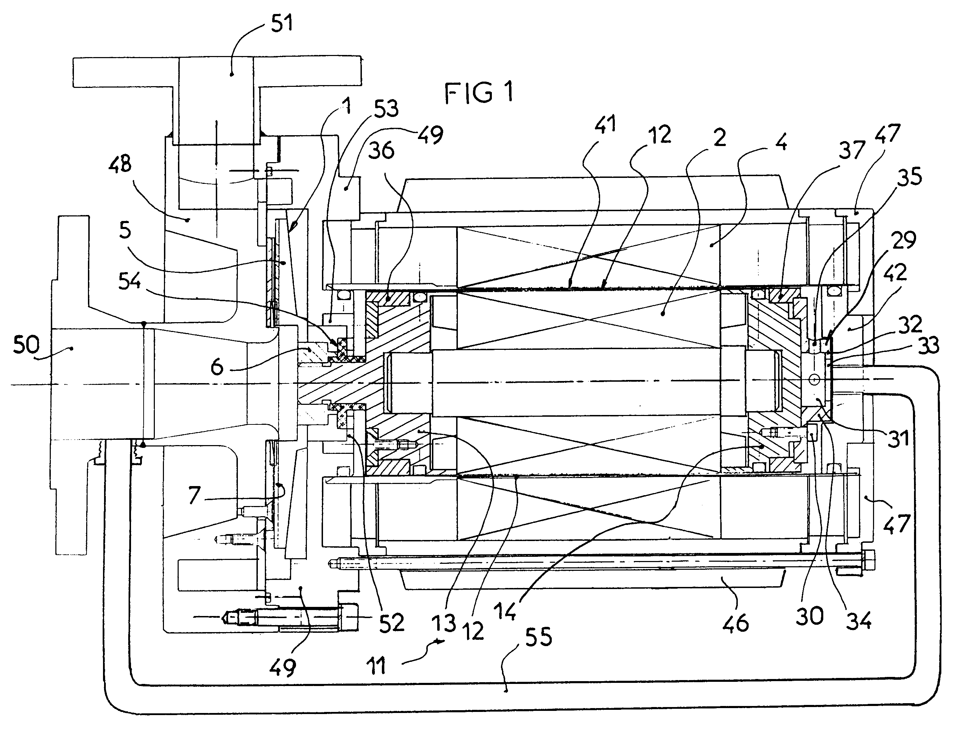

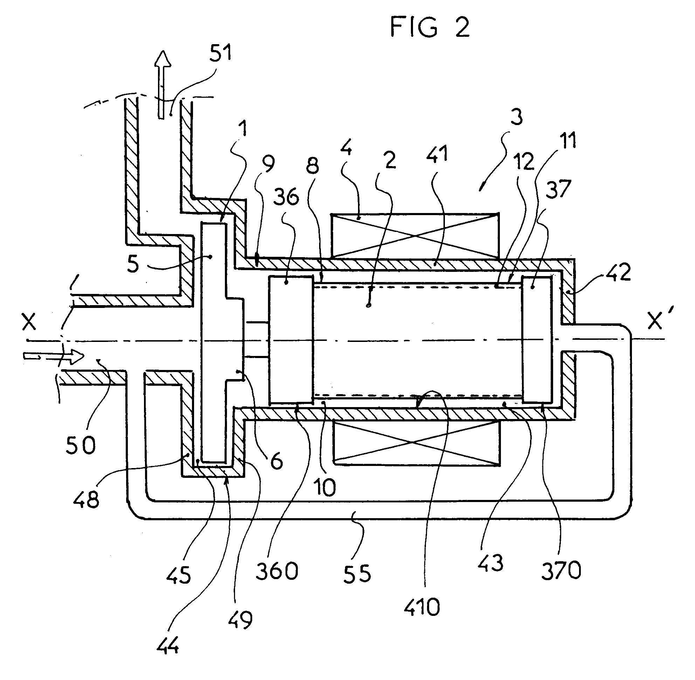

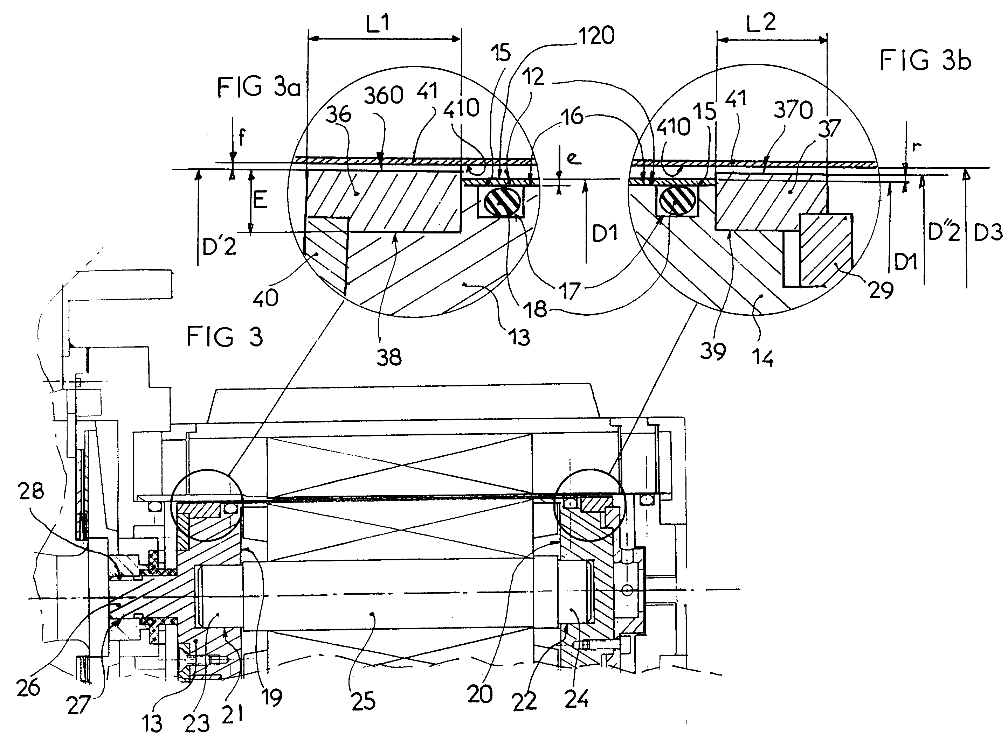

Les figures 1 à 5 illustrent donc une pompe rotative destinée au pompage de fluide, et notamment de liquide, et qui constitue l'une des utilisations possibles du dispositif de pivotement pour rotor noyé selon l'invention.

Dans cette application, la pompe comprend une turbine ou roue à ailettes (1) entraînée en rotation autour d'un axe (XX') par le rotor (2) d'un moteur électrique (3) qui est, par exemple, du type asynchrone, donc à champ tournant. Ce type de moteur est bien connu en soi et ne sera donc pas décrit dans ses détails. Notons seulement qu'il comprend d'une part, un stator ou inducteur (4) comprenant des enroulements alimentés en courant électrique, et d'autre part, un rotor ou induit (2). Ce dernier étant par exemple du type dit "à cage d'écureuil", appelé aussi "rotor en court-circuit" et constitué par une cage comprenant deux couronnes d'extrémité réunies par des barres de liaison, l'intérieur de la cage ainsi formée étant rempli de disques de tôle, isolés les uns des autres.

La turbine est constituée par une succession de plusieurs ailettes (5) reliées à un moyeu central (6), lesdites ailettes (5) destinées à centrifuger l'eau du centre vers la périphérie, créant ainsi la dépression nécessaire. Lesdites ailettes (5) étant par exemple solidaires d'une paroi transversale (7).

La pompe donnée à titre d'exemple est bien entendu du type à rotor immergé, et selon la disposition préférée donnée à titre d'exemple, la turbine (1) est solidaire dudit rotor (2) et lui est accouplé de façon à lui être totalement solidaire, et notamment en rotation. En effet, la rotation du rotor (2) autour de l'axe (XX') provoque avec lui, la rotation de la turbine (1) qui lui est solidaire. L'association de la turbine (1) avec le rotor (2) constituant ainsi un ensemble rotatif (8) qui, selon l'invention, est totalement immergé et logé dans un corps étanche (9).

Nous allons à présent décrire l'ensemble rotatif portant la référence générale (8). Cet ensemble comprend, comme nous l'avons dit et principalement, la turbine (1) et le rotor (2) qui est, selon la construction de l'invention, totalement isolé du liquide (10) immergeant ledit ensemble rotatif (8). On décrira plus particulièrement le dispositif de pivotement du rotor. Ainsi, le rotor (2) est contenu dans un ensemble d'étanchéité (11) constitué par une chemise (12) entourant ledit rotor, fermée aux deux extrémités par deux flasques (13, 14), respectivement un flasque avant (13) et un flasque arrière (14). La chemise de rotor (12) a la forme générale d'un tube constitué par une paroi périphérique cylindrique (15) entourant le rotor (2). Chacun des flasques d'extrémité (13, 14) est emboîté à l'intérieur de l'extrémité correspondante de la chemise et comprend sur sa face périphérique d'emboîtement (16), une gorge (17) contenant un joint torique (18). La paroi interne (19, 20) de chaque flasque comprend par ailleurs un trou borgne axial de centrage (21, 22), dans lequel sont engagées les extrémités (23, 24) de l'axe (25) du rotor (2).

Notons que le flasque avant (13) comprend un prolongement axial (26) dont l'extrémité filetée est destinée à coopérer avec le filetage intérieur (28) du moyeu (6) de la turbine (1). Par ailleurs, le flasque arrière (14) comprend une pièce complémentaire d'extrémité (29) fixée sur ledit flasque par quatre vis de fixation (30). Ladite pièce complémentaire (29) comprenant un logement central (31) limité par une paroi d'extrémité (32) percée d'un trou central (33) et par une paroi périphérique (34) percée de quatre trous radiaux (35).

Selon une caractéristique de l'invention, chacun des flasques (13, 14) comprend en plus une bague d'extrémité, le flasque avant (13) comprenant une bague d'extrémité avant (36), tandis que le flasque arrière (14) comprend un bague d'extrémité arrière (37). A cet effet, la face périphérique du flasque avant comprend une rainure périphérique (38) dans laquelle est engagée et retenue la bague d'extrémité avant (36); de même, la face périphérique du flasque arrière comprend une rainure périphérique (39) dans laquelle est engagée et retenue la bague d'extrémité arrière (37). La bague avant étant retenue par une bague de retenue (40) fixée au flasque avant par quatre vis, tandis que la bague arrière est retenue dans sa rainure, par la pièce complémentaire (29).

Le corps étanche (9) comprenant l'ensemble rotatif est constitué, d'une part par un manchon longitudinal (41) fermé à l'arrière par un bouchon d'extrémité arrière (42) formant une première chambre cylindrique (43) pour le rotor (2), et d'autre part, par un carter de turbine avant (44) définissant une deuxième chambre (45) pour la turbine (1). Le stator (4) est disposé au niveau du rotor (2), extérieurement au manchon (41), tandis que le bouchon d'extrémité (42) est retenu au corps de moteur (46) par une bague de retenue arrière (47). Le carter de turbine (44) est constitué par deux pièces, une pièce de carter avant (48) fixée sur une pièce de carter arrière (49). Ladite pièce de carter avant (48) comprend un orifice d'entrée (50) du fluide, disposé selon l'axe (XX') de la turbine et une orifice de sortie (51) du fluide, s'étendant radialement, par exemple vers le haut. Notons aussi que la pièce de carter arrière (49) comprend une paroi transversale (52) percée de trous de passage (53), ladite paroi s'étendant vers le prolongement axial (26), pour constituer avec la bague de rotor (54), un système de butée assurant la retenue axiale de l'ensemble rotatif (8). Afin d'amener ledit fluide au fond de ladite première chambre (43), une conduite (55) est prévue entre l'orifice d'entrée (50) du fluide et le bouchon d'extrémité (42).

Bien entendu, les diamètres extérieurs (D1) et (D'2, D''2), respectivement de la chemise (12) et des deux bagues d'extrémité (36, 37), sont inférieurs au diamètre intérieur (D3) du manchon (41). Selon une caractéristique de l'invention, le diamètre (D1) de la chemise (12) est légèrement inférieur aux diamètres (D'2, D''2) des deux bagues d'extrémité (36, 37). La surface extérieure (120) de la chemise (12) se trouvant par exemple en retrait d'une valeur (r) de 0,3 millimètres, par rapport aux surfaces extérieures (360, 370) des deux bagues (36, 37). Chacune des bagues d'extrémité (36, 37) est une pièce réalisée dans un matériau étant bien entendu compatible avec le fluide à pomper, mais ayant de bonnes caractéristiques de frottement. En effet, et comme nous l'expliquerons plus loin, elles servent d'appui à l'ensemble rotatif (8) quand le moteur est au repos, et servent aussi de pièce de frottement lors du démarrage et de l'arrêt. Ajoutons à cela que chacune des bagues est constituée par une paroi périphérique dont l'épaisseur (E) est supérieure à l'épaisseur (e) de la chemise (12). Par ailleurs, la largeur (L1) de la bague avant (36) est avantageusement supérieure à la largeur (L2) de la bague arrière (37), car les efforts d'appui du côté de la turbine (1) sont supérieurs à ceux que l'on a du côté opposé arrière.

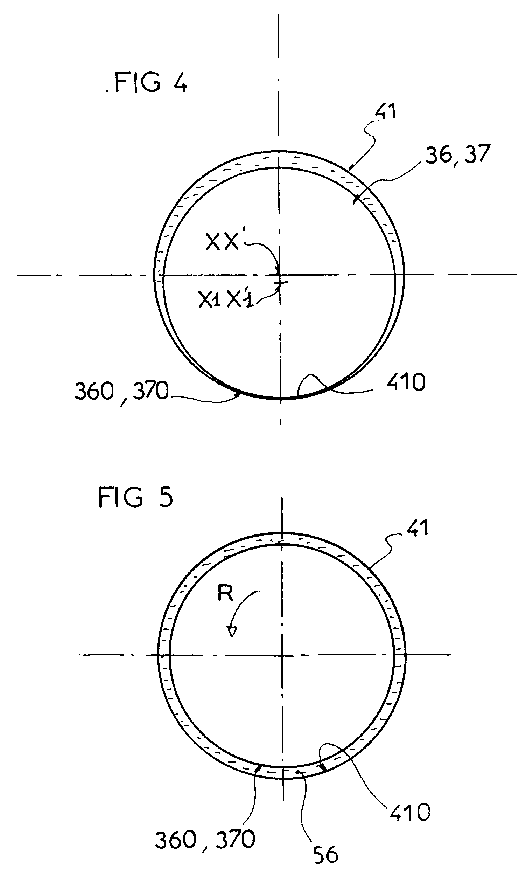

Les figures 4 et 5 illustrent de façon schématique, comment se forme le film de fluide assurant ainsi la portée hydrodynamique du rotor (2) et ainsi, de l'ensemble rotatif (8). La figure 4 représente, en coupe schématique, la position de repos dans laquelle l'ensemble rotatif, et plus particulièrement le rotor, n'est pas porté par le fluide. Dans cette position, les surfaces extérieures (360) et (370) des deux bagues (36, 37) sont en appui sur la partie basse de la face interne (410) du manchon (41). A l'état de repos, l'axe (X1X'1) de l'ensemble rotatif (8) ne coïncide donc pas avec l'axe (XX') des chambres de pivotement (43, 45). Lors de la mise en route, le rotor (2) se met à pivoter autour de son axe (X1X'1) grâce au champ magnétique créé par le stator (4); lors de cette rotation, il se crée un film de fluide (56) entre les surfaces extérieures (360, 370) des deux bagues (36, 37) et la face interne (410) du manchon (41). L'ensemble rotatif (8) se trouve être ainsi porté par un film de fluide constituant ainsi une portée hydrodynamique. Pendant le démarrage du rotor, il y a, dans un premier temps, frottement des bagues dans le manchon, puis dans un deuxième temps, décollement. De même, lors de l'arrêt du moteur, avant que le rotor ne soit arrêté et en appui, il y a frottement des bagues dans le manchon. On comprend l'intérêt desdites bagues qui sont conçues à cet effet, et peuvent éventuellement être démontées pour être remplacées en cas de besoin, la chemise (12) n'étant pas sollicitée et assurant ainsi l'étanchéité et l'isolation hydraulique du rotor (2). Ladite chemise (12) peut alors être de faible épaisseur et en un autre matériau, mais bien entendu, dans un matériau compatible avec le fluide.

Il va de soi qu'on ne sortirait pas du cadre de l'invention si le flasque avant (13) et la bague d'extrémité avant (36) étaient une seule et même pièce, de même que si le flasque arrière (14) et la bague d'extrémité arrière (37) étaient une seule et même pièce. Toutefois, la disposition décrite et illustrée est une disposition possible qui permet le remplacement facile des bagues d'extrémité, en cas d'usure éventuelle. Il va de soi aussi que le rotor pourrait être surmoulé dans une résine ou autre matériau.

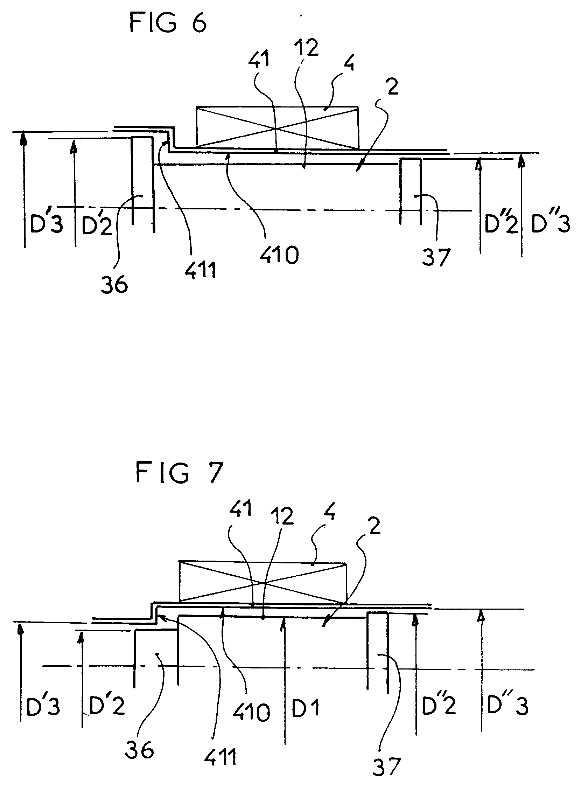

Selon le mode de réalisation donné précédemment et illustré au regard des figures 1 à 5, le diamètre (D'2) de la bague avant (36) est égal au diamètre (D''2) de la bague arrière (37). Toutefois, il pourrait en être autrement, comme cela est illustré aux figures 6 et 7. Dans ces variantes, le diamètre (D'2) de la bague avant (36) est différent du diamètre (D''2) de la bague arrière (37). La figure 6 illustre un premier mode d'exécution dans lequel le diamètre (D'2) de la bague avant (36) est supérieur au diamètre (D''2) de la bague arrière (37), tandis que dans le mode d'exécution de la figure 7, c'est le contraire, et le diamètre (D'2) de la bague avant (36) est inférieur au diamètre (D''2) de la bague arrière (37). Bien entendu, la paroi intérieure (410) du manchon (41) comprend un épaulement (411) pour qu'il présente deux successions de diamètres intérieurs correspondants (D'3, D''3), afin que le film de fluide se forme dans de bonnes conditions. On constate aussi par ailleurs, que dans le mode d'exécution de la figure 7, le diamètre (D1) de la chemise (12) est supérieur au diamètre (D'2), tout en étant inférieur au diamètre (D''2), alors que dans le mode d'exécution de la figure précédente (6), le diamètre (D1) est inférieur, à la fois aux diamètres (D'2) et (D''2).

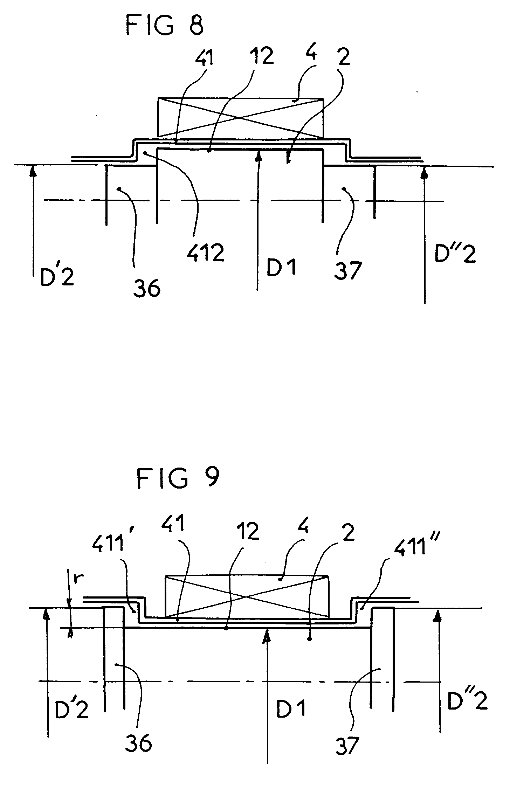

La figure 8 illustre une autre variante selon laquelle le diamètre (D1) est supérieur aux deux diamètres (D'2, D''2). Dans cette variante, le manchon (41) comprend une gorge circulaire médiane (412) dans la zone du rotor (2), et dans laquelle il prend place.

Une solution inverse est possible et est illustrée à la figure 9 et selon laquelle, le diamètre (D1) est inférieur aux diamètres (D'2, D''2), comme selon le mode de réalisation des figures 1 à 3, mais la différence (r) y est plus importante et le manchon comprend alors deux évidements (411') et (411'') dans la zone d'extrémité des bagues d'extrémités.

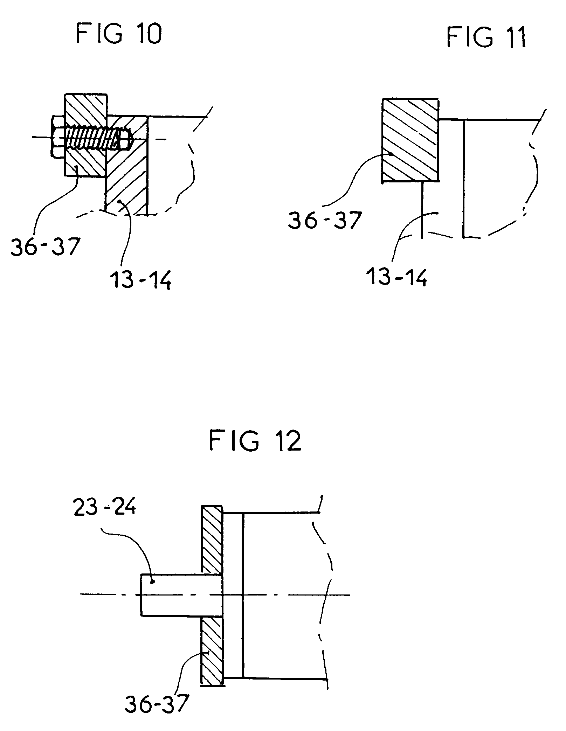

Il va de soi aussi et en ce qui concerne la construction des bagues d'extrémité (36, 37), que toute solution technique peut être envisagée, comme cela est illustré aux figures 10, 11 et 12 illustrant d'autres modes d'exécution du montage de l'une ou l'autre, ou des deux bagues d'extrémité. Dans la variante de la figure 10, la bague (36, 37) est vissée sur le flasque (13, 14) correspondant, par des moyens spécifiques. Dans la variante de la figure 11, la bague (36, 37) est emmanchée sur le flasque correspondant (13, 14) pour y être collée ou soudée. Dans la variante de la figure 12, la bague (36, 37) est fixée sur l'arbre du rotor (23, 24) après engagement, pour y être soit vissée, soit collée ou soudée ou fixée avec tout autre moyen.

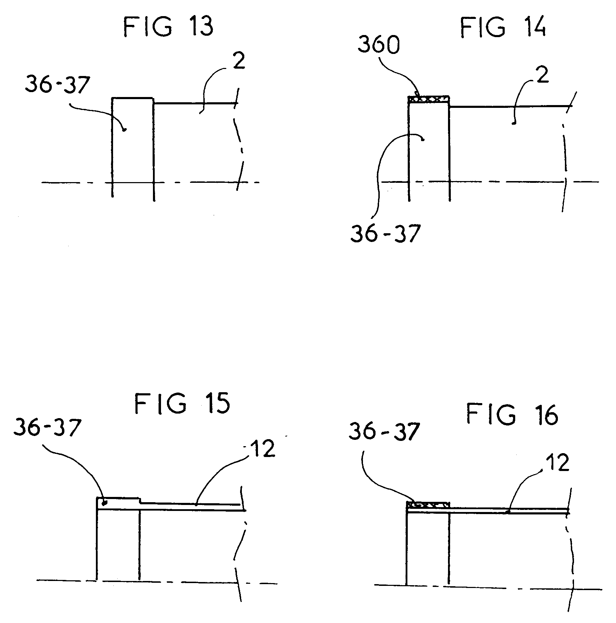

Il est aussi possible que l'une ou l'autre bague d'extrémité (36, 37), voire même les deux, soit partie intégrante du rotor (2), comme cela est représenté aux figures 13 et 14. La figure 14 illustrant une variante de la réalisation de la figure 13, selon laquelle la bague (36) et/ou (37) comprend un revêtement (360).

Les variantes illustrées par les figures 15 et 16 sont telles que l'une ou l'autre des bagues (36) et/ou (37) fait partie intégrante de la chemise de rotor (12). Selon la variante de la figure 15, la bague est constituée par une excroissance en extrémité de ladite chemise. Selon la variante de la figure 16, cette excroissance est réalisée par un revêtement d'extrémité faisant saillie.

On a vu par ailleurs que la largeur (L1) de la bague avant (36) pouvait être différente de la largeur (L2) de la bague arrière (37) et que dans le mode de réalisation des figures 1 à 3, la largeur (L2) était inférieure à la largeur (L1). On pourrait bien entendu avoir la disposition inverse, à savoir que la largeur (L2) soit supérieure à la largeur (L1). Bien entendu, dans certaines constructions, les deux largeurs (L1) et (L2) pourraient être égales.

Les figures 1 à 3 illustrent un exemple d'application du dispositif de pivotement, mais bien d'autres applications sont possibles. En effet, le rotor pourrait entraîner l'hélice d'un ventilateur ou d'un agitateur. Notons aussi que le champ magnétique entraînant le rotor peut être créé par un stator bobiné, comme cela est représenté aux figures 1 à 3, mais aussi par tout autre moyen, comme par exemple des aimants permanents tournant autour du manchon statorique.

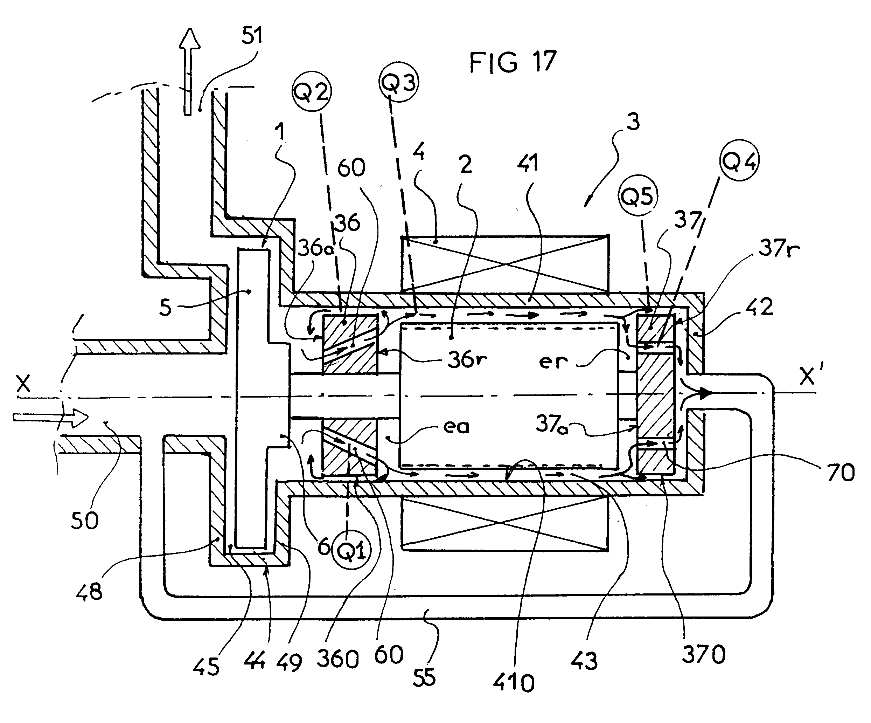

La figure 17 illustre dans une coupe longitudinale une variante d'exécution de l'invention selon laquelle les deux bagues d'extrémité (36, 37) ne sont plus plaquées contre le rotor (2) mais légèrement espacées de ce dernier pour ménager entre la bague avant (36) et la face avant (2a) du rotor (2) un espace avant (e a) et entre la bague arrière (37) et la face arrière (2r) du rotor (2) un espace arrière (e r). Par ailleurs, chacune des bagues d'extrémité (36, 37) comprend une succession de trous faisant communiquer l'avant avec l'arrière de chacune desdites bagues. Ainsi, la bague avant (36) comprend par exemple six trous de communication (60) dont les axes convergent vers l'avant, permettant au fluide de passer de l'avant de la bague à l'arrière dans l'espace avant (e a). De même, la bague arrière (37) comprend par exemple six trous de communication (70) dont les axes sont parallèles à l'axe XX', permettant au fluide de passer de l'espace arrière (e a) à l'arrière de ladite bague arrière pour être ensuite refoulé dans la conduite (55). Notons que la bague avant (36) percée de ses trous (60) forme une turbine pemettant le pompage du fluide, (à la pression Pa) contenu dans l'avant de la chambre (43) pour le refouler à une pression différente (Pr) dans l'espace avant (e a) et donc entre les deux bagues.

Le perçage (70) de la bague arrière (37) permet le calibrage du débit. Ainsi le débit (Q1) du fluide passant par les trous (60) de la bague avant (36) se divise en un premier débit (Q2) assurant la lubrification et l'évacuation des calories de la bague avant (36) et un deuxième débit (Q3) assurant l'évacuation des calories du rotor (2) et du stator (4). Par ailleurs, le deuxième débit (Q3) se divise en un premier débit (Q4) servant à calibrer l'ensemble du débit et en un deuxième débit (Q5) assurant la lubrification et l'évacuation des calories de la bague arrière.

Bien entendu, le système peut être inversé : bague arrière (37) assurant le pompage et bague avant (36) assurant le calibrage du débit. Notons que le système a pour avantage d'assurer la lubrification des bagues et d'évacuer les calories de frottement hydraulique, d'évacuer les calories dégagées par effet ``JOULE'' et courants de ``FOUCAULT'' dans le stator (4) et du rotor (2), de pressuriser le débit de lubrification et de refroidissement (Pr>Pa) et d'éviter ainsi les risques de cavitation, de supprimer l'effet de piston (alimentation entre les bagues) par rapport à une alimentation de débit extérieure aux bagues.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Dispositif de pivotement pour rotor (2) de moteur (3), ledit rotor (2) comprenant à ses deux extrémités, une pièce ou bague d'extrémité, respectivement une pièce ou bague d'extrémité avant (36) et une pièce ou bague d'extrémité arrière (37), caractérisé en ce que le rotor est noyé dans un fluide liquide contenu dans une chambre (43) tandis que le diamètre (D2) de chacune des bagues est légèrement inférieur au diamètre (D3) de ladite chambre dans la zone de ladite bague de façon à ce qu'en position de repos le rotor soit en appui dans la chambre par l'intermédiaire des bagues d'extrémité, tandis qu'en rotation, il se crée un film de fluide entre les surfaces extérieures des bagues et la face interne de la chambre constituant ainsi une portée hydrodynamique.

2. Dispositif de pivotement pour rotor noyé selon la revendication 1, caractérisé en ce que la largeur (L1) de la bague d'extrémité avant (36) est égale à la largeur (L2) de la bague d'extrémité arrière (37).

3. Dispositif de pivotement pour rotor noyé selon la revendication 1, caractérisé en ce que la largeur (L1) de la bague d'extrémité avant (36) est différente de la largeur (L2) de la bague d'extrémité arrière (37).

4. Dispositif de pivotement pour rotor noyé selon l'une quelconque des revendications précédentes, caractérisé en ce que le diamètre (D'2) de la bague d'extrémité avant (36) est égal au diamètre (D''2) de la bague d'extrémité arrière (37).

5. Dispositif de pivotement pour rotor noyé selon l'une quelconque des revendications précédentes, caractérisé en ce que le diamètre (D'2) de la bague d'extrémité avant (36) est différent du diamètre (D''2) de la bague d'extrémité arrière (37).

6. Dispositif de pivotement pour rotor noyé selon l'une quelconque des revendications précédentes, caractérisé en ce que le rotor proprement dit est contenu dans l'ensemble d'étanchéité (1) constitué par une chemise (12) ayant la forme générale d'un tube constitué par une paroi périphérique cylindrique (15) entourant le rotor, fermé à ses deux extrémités, respectivement par un flasque avant (13) et un flasque arrière (14).

7. Dispositif de pivotement pour rotor noyé selon la revendication 6, caractérisé en ce que l'une au moins des bagues d'extrémités (36) ou (37) est amovible et est fixée de façon démontable sur le flasque correspondant (13) ou (14).

8. Dispositif de pivotement pour rotor noyé selon l'une quelconque des revendications précédentes, caractérisé en ce que l'une au moins des bagues d'extrémité (36 ou 37) n'est pas plaquée contre le rotor proprement dit et comprend plusieurs trous (60 ou 70) permettant le passage du fluide de la partie avant de la bague à la partie arrière.

9. Dispositif de pivotement pour rotor noyé selon la revendication 7 caractérisé en ce que la bague d'extrémité arrière (37) est décalée par rapport au rotor proprement dit pour ménager un espace arrière (e r), ladite bague comprenant plusieurs trous (70) dont les axes respectifs sont dans des plans passant par l'axe (XX') de pivotement du rotor (2').

10. Dispositif de pivotement pour rotor noyé selon la revendication 7 ou 8 caractérisé en ce que la bague d'extrémité avant (36) est décalée par rapport au rotor proprement dit pour ménager un espace avant (e a), ladite bague comprenant plusieurs trous (60) dont les axes respectifs sont dans des plans passant par l'axe (XX') de pivotement du rotor (2).

11. Dispositif de pivotement pour rotor noyé selon la revendication 10 caractérisé en ce que les axes des trous (60) sont convergents vers l'avant pour le pompage du fluide de la partie avant de la bague vers la partie arrière.
